# EUROPEAN PATENT APPLICATION

(11) **EP 4 694 349 A1**
(43) Date of publication of application: **11.02.2026**
(21) Application number: 24784832.8
(22) Date of filing: 29.03.2024
(51) Int. Cl.: H04W 36/08, H04W 16/26, H04W 36/38, H04W 88/04, H04W 92/18

(54) **BASE STATION, USER TERMINAL, CONTROL METHOD, AND PROGRAM**

(30) Priority: 06.04.2023 JP 2023061970
(71) Applicant: Canon Kabushiki Kaisha, Tokyo, 146-8501 (JP)
(72) Inventor: NISHIYAMA Kosuke, Tokyo 146-8501 (JP)
(74) Representative: Canon Europe Limited
(86) International application number: PCT/JP2024/012947
(87) International publication number: WO 2024/210045

(57) **Abstract**

A base station includes a first acquisition unit configured to acquire first signal strength information in a first relay state of being connected to a remote UE via one relay UE, the first signal strength information indicating a first signal strength between the remote UE and the one relay UE, and a processing unit configured to, based on the first signal strength information, issue a switch instruction to the remote UE to switch from the first relay state to a second relay state via a different relay UE different from the one relay UE.

## Description

### Technical Field

The present disclosure relates to a base station, a user equipment, a control method, and a program.

### Background Art

In recent years, the specifications of Long Term Evolution (LTE) and 5th Generation New Radio (5G NR) of 3rd Generation Partnership Project (3GPP) (registered trademark) have been developed. Among them, a standard specification called Sidelink communication (hereinafter, referred to as "Sidelink") has been developed. This specification enables direct wireless communication between devices using an interface called PC5 without passing through a mobile communication network (core network).

Furthermore, in 3GPP, a specification to expand the communication range of Sidelink with a Sidelink relay function that relays Sidelink communication through a relay device (relay UE) has been developed. 3GPP defines means for a communication terminal (remote UE) having a function of connecting to a base station through a Sidelink function relay to switch from an indirect path to a direct path and means for the communication terminal to switch from the direct path to the indirect path. The indirect path here corresponds to a communication path to connect to the base station via the relay UE, and the direct path corresponds to a communication path to connect to the base station without passing through the relay UE. In this case, switching from the indirect path to the direct path or switching from the direct path to the indirect path can be achieved without disconnecting the running service.

PTL 1 suggests improvements to the inconveniences that arise during the procedure when a remote UE connects to a base station via a relay UE (discovery).

### Citation List

### Patent Literature

PTL 1: PCT Japanese Translation Patent Publication No. 2018-535594

### Summary of Invention

### Technical Problem

Incidentally, in a first state where the remote UE communicates with the base station via the relay UE, it is highly convenient if it is possible to switch to a second state where the remote UE communicates with the base station via another relay UE when, for example, the communication condition becomes poor. This is because, for example, services in use in the first state can be continuously used in the second state.

However, the above-described existing technologies have an inconvenience that such switching cannot be achieved.

The present invention is made to address at least one of the above inconveniences. One aspect of the present invention is to provide a mechanism for flexibly achieving the switching of relay UEs.

### Solution to Problem

One aspect of the present invention provides a base station. The base station includes a first acquisition unit configured to acquire first signal strength information in a first relay state of communicating with a remote user equipment, UE, via one relay UE, the first signal strength information indicating a first signal strength between the remote UE and the one relay UE, and a processing unit configured to, based on the first signal strength information, issue a switch instruction to the remote UE to switch from the first relay state to a second relay state of communicating with the remote UE via a different relay UE different from the one relay UE, wherein the remote UE that can be in the first relay state is a remote UE that supports transmission of a discovery message related to 5G. Advantageous Effects of Invention

According to one aspect of the present invention, it is possible to provide a mechanism that flexibly achieves the switching of relay UEs.

### Brief Description of Drawings

[Fig. 1] Fig. 1 is a diagram that shows an example of the configuration of communication apparatuses in a first embodiment.
[Fig. 2] Fig. 2 is a block diagram that shows an example of the functional configuration of a base station in the first embodiment.
[Fig. 3] Fig. 3 is a block diagram that shows an example of the functional configuration of a remote UE in the first embodiment.
[Fig. 4] Fig. 4 is a diagram that shows an example of a sequence among the communication apparatuses in the first embodiment.
[Fig. 5] Fig. 5 is an example of a flowchart between the communication apparatuses in the first embodiment.
[Fig. 6] Fig. 6 is an example of a flowchart between the communication apparatuses in the first embodiment.
[Fig. 7] Fig. 7 is an example of a flowchart between the communication apparatuses in the first embodiment.
[Fig. 8] Fig. 8 is an example of a flowchart between communication apparatuses in a second embodiment.
[Fig. 9] Fig. 9 is an example of a flowchart between communication apparatuses in a third embodiment. Description of Embodiments

Hereinafter, embodiments will be described in detail with reference to the attached drawings.

### <First Embodiment>

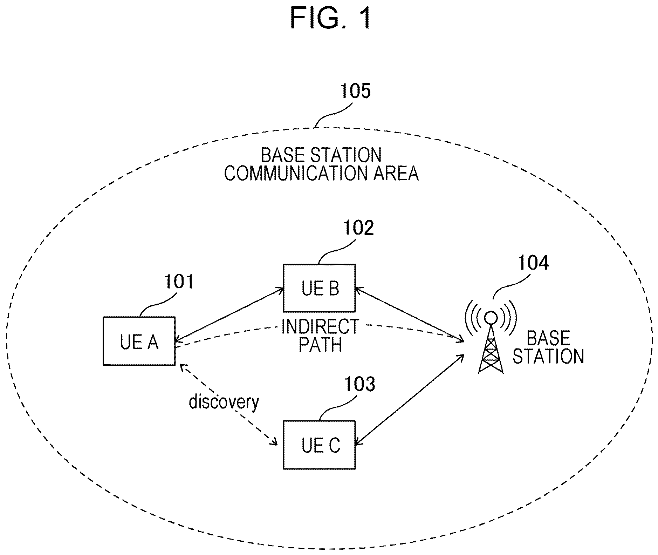

Fig. 1 is a diagram that shows a configuration example of a system according to the present embodiment. In Fig. 1, a UE A 101, a UE B 102, and a UE C 103 are located within a communication area 105 of a base station 104.

In the present embodiment, a user equipment (UE) is assumed to be a terminal that supports Sidelink relay communication. Specifically, it is assumed that the UE is a smartphone or the like; however, the UE is not limited thereto. The UE may be, for example, a communication terminal, such as a tablet terminal and a PC, a wearable terminal, such as a smart watch and a head mounted display, and a car navigation system installed in an automobile, or the like.

The UE A 101 operates as a remote UE that communicates with the base station 104 using Sidelink relay communication. The UE B 102 operates as a relay UE that relays communication between the UE A 101 and the base station 104 using a Sidelink relay function. In other words, the UE A 101 shown in Fig. 1 transmits and receives data to and from the base station 104 via an indirect path, that is, via the UE B 102.

The UE C 103 has a Sidelink relay function and is capable of operating as a relay UE. Fig. 1 illustrates a state where the UE C 103 is connected to the base station 104, however, the UE C 103 has not started the operation as a relay UE.

The UE A 101 is capable of transmitting a discovery signal (discovery request signal) for the purpose of searching for a UE that is a different UE different from the UE B 102 and that can become a relay UE (hereinafter, referred to as "candidate relay UE"). For example, the UE A 101 is capable of transmitting a discovery signal to a UE present near the UE A 101 (hereinafter referred to as "neighboring UE"), for example, the UE C 103. The UE A 101 is capable of receiving a response signal from a neighboring UE to such a discovery signal.

The discovery signal may be a Soliciation Message for 5G ProSe direct discovery or 5G ProSe UE-to-Network Relay Discovery. ProSe is the abbreviation of Proximity based Services. The response signal may be a Response Message to a Soliciation Message. The UE A 101 is capable of receiving discovery signals transmitted from candidate relay UEs for the purpose of searching for candidate relay UEs. The discovery signal transmitted from a candidate relay UE may be a 5G ProSe UE-to-Network Relay direct discovery Announcement message or Additional Information. The discovery procedure may be based on the fact that the remote UE receives a 5G ProSe UE-to-Network Relay direct discovery Announcement message or receives Additional Information.

The UE C 103 is capable of responding to a discovery signal from the UE A 101 and is also capable of transmitting a discovery signal to neighboring UEs by itself.

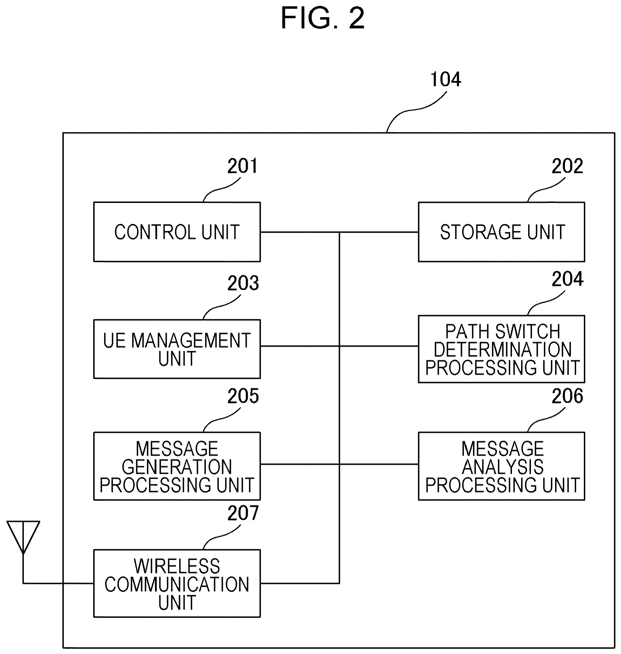

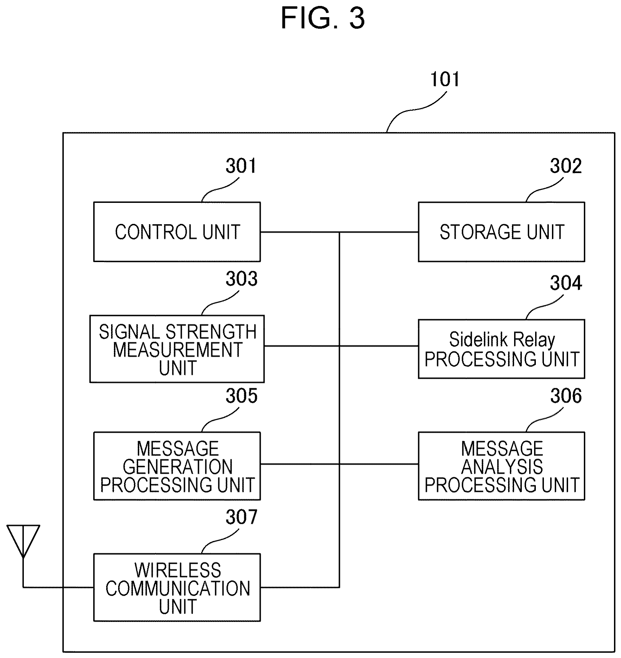

Fig. 2 is a block diagram that shows an example of the functional configuration of the base station 104 in the present embodiment. One or some or all of the functional blocks described with reference to Figs. 2 and 3 may be replaced with other functional blocks that perform similar functions, one or some of the functional blocks may be omitted, or additional functional blocks may be added. One functional block described in the following description may be divided into a plurality of functional blocks or a plurality of functional blocks may be integrated into one functional block.

In the example shown in Fig. 2, the base station 104 includes a control unit 201, a storage unit 202, a UE management unit 203, a path switch determination processing unit 204, a message generation processing unit 205, a message analysis processing unit 206, and a wireless communication unit 207.

The control unit 201 controls the operation of the base station 104. The control unit 201 is made up of, for example, one or more processors, such as a CPU and an MPU, and controls the entire communication apparatus by running a control program read from a RAM that is the storage unit 202. Processes to be executed by the control unit 201, described with reference to the flowchart (described later), can also be realized using a hardware circuit, such as an application specific integrated circuit (ASIC) and a field programmable gate array (FPGA). By collaborating a hardware circuit with a processor, such as a CPU and an MPU, it is also possible to realize the processes described in the flowchart (described later).

The storage unit 202 saves information that the control unit 201 uses for control and information related to communication. The storage unit 202 may include a main storage unit and an auxiliary storage unit. Examples of the main storage unit include a read only memory (ROM) and a random access memory (RAM). The main storage unit may store or temporarily save programs and data of an operating system (OS), which is basic software, and application software, executed by the control unit 201. Examples of the auxiliary storage unit include a hard disk drive (HDD) and a solid state drive (SSD). The auxiliary storage unit may store data related to application software and the like. For example, the control programs stored in a non-volatile storage area are deployed to the random access memory (RAM) and run by the processor that makes up the control unit 101. In this way, the control unit 101 and the storage unit 102 may function as a so-called computer.

The storage unit 202 may include a recording medium that stores a predetermined program. The program stored on the recording medium may be installed via a drive device or the like, and the installed predetermined program may be executable by the control unit 201. Various types of recording media may be used as the recording medium. The recording medium may be a recording medium that optically, electrically, or magnetically records information, like a compact disc (CD)-ROM, a flexible disk, a magneto-optical disc, or the like. The recording medium may be, for example, a semiconductor memory that electrically records information, like a ROM, a flash memory, or the like. A carrier is not included in the recording media.

The UE management unit 203 manages UE information within a base station area. The UE management unit 203 manages UE information that includes the IDs of subordinate UEs and measurement results (signal strengths of Uu links (described later) and the like) reported from the subordinate UEs. The path switch determination processing unit 204 determines whether to connect the UE under management via an indirect path or a direct path based on the UE information managed by the UE management unit 203. The message generation processing unit 205 generates a message used to issue an instruction for path switching. The message analysis processing unit 206 analyzes messages received from subordinate UEs.

The functions corresponding to the UE management unit 203, the path switch determination processing unit 204, and/or the message generation processing unit 205 may be implemented as software modules realized by the control unit 101.

The wireless communication unit 207 transmits and receives information through wireless communication to and from subordinate UEs. For example, the wireless communication unit 207 executes a process of transmitting messages generated by the message generation processing unit 205 and a process of receiving messages from subordinate UEs.

Fig. 3 is a block diagram that shows an example of the functional configuration of the remote UE (for example, the UE A 101 or the UE C 103) in the present embodiment.

In the example shown in Fig. 3, the remote UE includes a control unit 301, a storage unit 302, a signal strength measurement unit 303, a Sidelink Relay processing unit 304, a message generation processing unit 305, a message analysis processing unit 306, and a wireless communication unit 307.

The control unit 301 controls the operation of the remote UE. The control unit 301 is made up of, for example, one or more processors, such as a CPU and an MPU, and controls the entire communication apparatus by running a control program read from a RAM that is the storage unit 302. Processes to be executed by the control unit 301, described with reference to the flowchart (described later), can also be realized using hardware circuits such as an ASIC and a an FPGA. By collaborating a hardware circuit with a processor, such as a CPU and an MPU, it is also possible to realize the processes described in the flowchart (described later).

The storage unit 302 saves information that the control unit 301 uses for control and information related to communication. The signal strength measurement unit 303 measures the "signal strength with the relay UE (relay link)", the "signal strength with the base station (Uu link)", and the "signal strength with the candidate relay UE" from the remote UE. The Sidelink Relay processing unit 304 performs Sidelink connection with a relay UE to enable connection to the base station 104 via the relay function of the relay UE (that is, via an indirect path). The message generation processing unit 305 generates various messages. Various messages include a discovery signal transmitted to neighboring relay UEs, and an RRC Reconfiguration Complete message and a Measurement Report transmitted to the base station 104. The message analysis processing unit 306 analyzes discovery signals and response signals transmitted from neighboring relay UEs and messages, such as an RRC Reconfiguration message, transmitted from the base station 104. The wireless communication unit 307 transmits and receives information via wireless communication to and from neighboring relay UEs and the base station 104. The wireless communication unit 307 executes a process of transmitting messages generated by the message generation processing unit 205 and a process of receiving messages from the neighboring relay UEs and the base station 104.

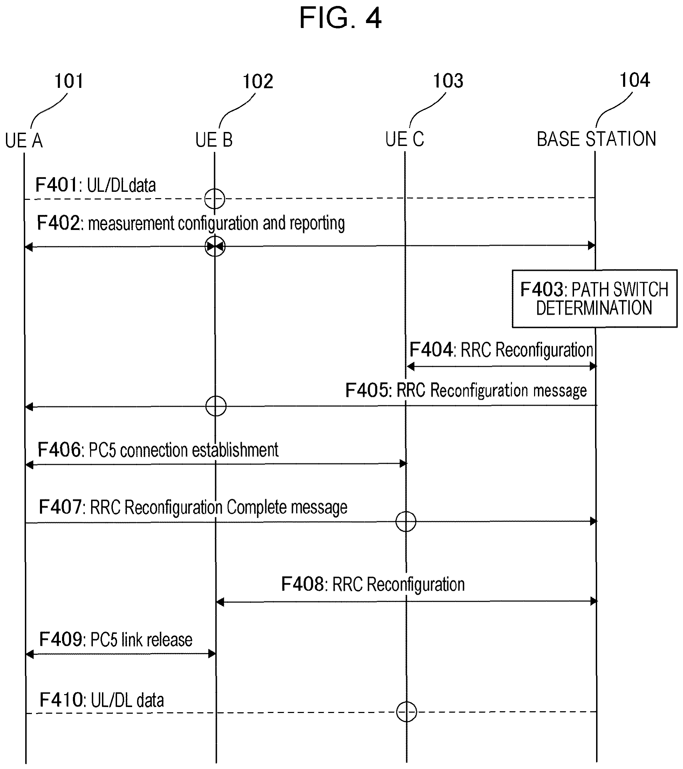

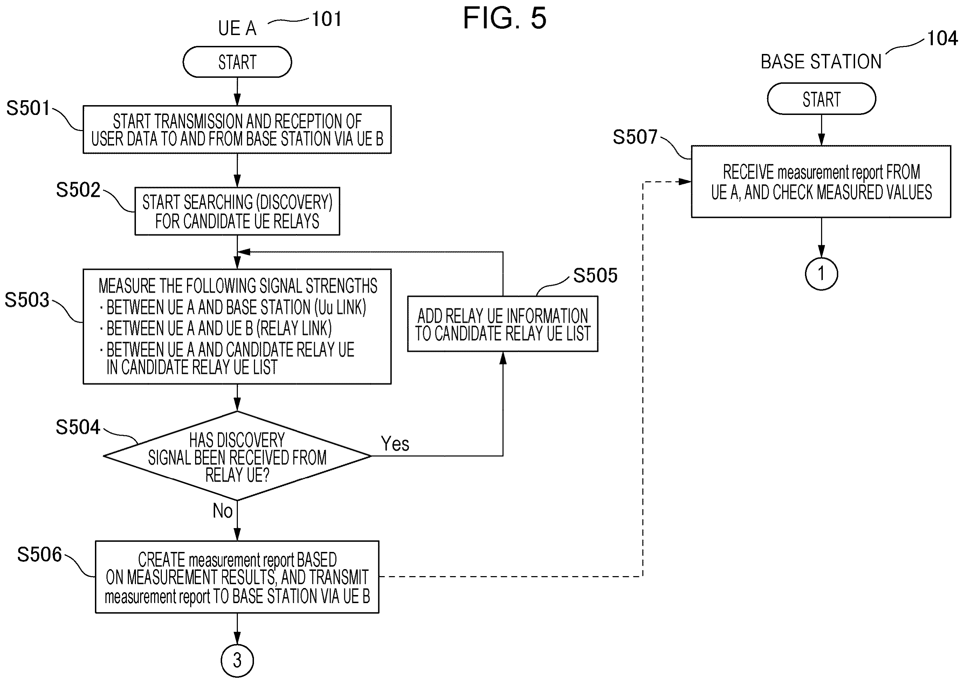

Next, the operation of the present embodiment will be described with reference to the operation sequence diagram shown in Fig. 4 and the flowcharts shown in Figs. 5, 6, and 7.

Fig. 4 is an example of a switch sequence from an indirect path to another indirect path in the present embodiment. Figs. 5, 6, and 7 are flowcharts in which the contents of the sequence in Fig. 4 in the present embodiment are separated for the base station 104 and the UE A 101. The processes shown in each flowchart may be implemented by the control unit 201 running the control program stored in the storage unit 202 at the base station 104. Computation and processing of information and control of pieces of hardware may be implemented by execution by the control unit 301 running the control program stored in the storage unit 302 in the UE A 101.

A switching procedure to switch connection from a first indirect path using the UE B 102 to a second indirect path using the UE C 103 will be described with reference to the sequence diagram and the flowcharts.

The UE A 101 transmits and receives user data via the UE B 102.

Initially, communication through an indirect path A will be described. The UE A 101 transmits and receives user data to and from the base station 104 via the Sidelink relay function of the UE B 102 (F401, S501). In other words, the UE A 101 is transmitting and receiving user data (streaming data or the like) to and from the base station 104 by using the Sidelink Relay processing unit 304. In Fig. 4, for the sake of clearly indicating the process in which the relay UE is relaying communication between the remote UE and the base station, points where the relay UE is executing the relaying process are indicated by circle marks. The dashed lines in Fig. 4 indicate transmission and reception of user data, and the continuous lines indicate transmission and reception of control data.

During transmission and reception of user data to and from the base station 104, the control unit 301 of the UE A 101 activates the message generation processing unit 305. Then, the control unit 301 generates a discovery signal. Subsequently, the control unit 301 of the UE A 101 transmits the generated discovery signal to neighboring UEs through the wireless communication unit 307. The control unit 301 activates the message analysis processing unit 306 to prepare for the analysis of messages to be conducted at the time of receiving a response signal to the discovery signal or a discovery signal from a neighboring UE through the wireless communication unit 307. In other words, the control unit 301 of the UE A 101 starts a discovery process of searching for candidate UE relays (S502).

Subsequently, the signal strength measurement unit 303 activated in advance by the control unit 301 of the UE A 101 starts measuring the "signal strength between the UE A 101 and the base station 104" and the "signal strength between the UE A 101 and the UE B 102" in collaboration with the wireless communication unit 307 (F402, S503). Hereinafter, the link between the UE A 101 and the base station 104 is referred to as "Uu link", and the link between the UE A 101 and the UE B 102 is referred to as "relay link".

When the wireless communication unit 307 receives a discovery signal from a neighboring UE or a response signal to a discovery signal, the message analysis processing unit 306 analyzes the received signal. Then, the message analysis processing unit 306 stores the ID or serving cell ID of the neighboring UE that has transmitted the signal in a candidate relay UE list ("YES" in S504, S505). The candidate relay UE list may be stored in the storage unit 302.

When there is a candidate relay UE in the candidate relay UE list, the signal strength measurement unit 303 starts measuring the "signal strength between the UE A 101 and the candidate relay UE" (S503).

When the UE A 101 stops receiving a discovery signal and a response signal to a discovery signal from neighboring UEs ("NO" in S504), the UE A 101 creates a Measurement report (S506). In other words, the UE A 101 creates a Measurement report in accordance with an event designated in advance by a Measurement configuration from the base station 104. Negative determination in step S504 may be allowed after a predetermined time from the start of the process of step S502. More specifically, the process just needs to proceed to S506 when it is determined that the predetermined time has elapsed since the start of the process of S502; whereas, when it is not determined that the predetermined time has elapsed, reception of a signal is waited, and a process of updating the list just needs to be executed each time a discovery signal is received.

Next, the process of transmitting search results will be described. Then, the UE A 101 transmits the Measurement report to the base station 104 via the UE B 102 (F402, S506). This Measurement report includes the measurement results (various signal strengths) from the signal strength measurement unit 303 and the candidate relay UE list in the storage unit 302.

Next, the control of the base station 104 that receives the Measurement report will be described. When the wireless communication unit 207 of the base station 104 receives the Measurement report, the path switch determination processing unit 204 checks various signal strengths in the UE A 101, analyzed by the message analysis processing unit 206 (S507). In this case, various signal strengths include the "signal strength of the Uu link", the "signal strength of the relay link" and the "signal strength between the UE A 101 and the candidate relay UE in the candidate relay UE list".

When the signal strength of the relay link at the UE A 101 is higher than or equal to a threshold Th1 (an example of a first threshold) ("YES" in S601), the path switch determination processing unit 204 determines that the relay can be continued and completes the determination without executing anything. The threshold Th1 corresponds to the lower limit value of the signal strength range that enables stable continuation of the relay. Th1 is assumed to be a threshold set by the vendor of the base station 104; however, Th1 is not limited thereto. Th1 may be a threshold set by a communication carrier that uses the base station 104. In this case, Th1 may be configured to be changed via a settings screen (not shown) or the like as an operation parameter of the base station 104. The threshold Th1 may be a threshold defined as a reference value to be changed in a connection test or the like between the base station and the UE or may be a threshold defined as a reference value to be changed in a communication standard. On the other hand, when the signal strength of the relay link at the UE A 101 is lower than the threshold Th1 ("NO" in S601), the path switch determination processing unit 204 determines that the relay is difficult to be continued, and checks the signal strength of the Uu link at the UE A 101. Then, when the "signal strength of the Uu link" is higher than or equal to a threshold Th2 (an example of a second threshold) ("YES" in S602), the path switch determination processing unit 204 issues an instruction to the UE A 101 to switch from an indirect path to a direct path to cause the UE A 101 to switch the path (S603). In this case, the threshold Th2 may be the same as the threshold Th1 or may be different from the threshold Th1. For example, the threshold Th2 may be a value higher than the threshold Th1. Similarly to Th1, Th2 may be a value set by the vendor of the base station 104, or may be a threshold set by a communication carrier. Similar to Th1, Th2 may be a threshold defined by a connection test or a threshold defined by a communication standard. By executing the process of S603, it is possible to switch the connection state from a state where the UA A 101 uses the first indirect path to connect to the base station 104 using the UE B 102 to a state where the UE A 101 uses the direct path to directly connect to the base station 104.

When the signal strength of the Uu link at the UE A 101 is lower the threshold Th2 ("NO" in S602), the path switch determination processing unit 204 determines that the relay is difficult to be continued even when the path is switched to the direct path, and checks the candidate relay UE list. From among the candidate relay UE list, the path switch determination processing unit 204 identifies the candidate relay UE with the same serving cell ID (that is, within the cell of the base station 104) and the highest signal strength (S604). For the sake of description, a case where a candidate relay UE present in the cell of the base station 104 and having the highest signal strength is the UE C 103 will be described as an example.

In this case, the path switch determination processing unit 204 compares the signal strength between the UE A 101 and the UE C 103 that is the candidate relay UE with the threshold Th1. At this time, when the signal strength between the UE A 101 and the UE C 103 is lower the threshold Th1 ("NO" in S605), the path switch determination processing unit 204 determines that the relay is difficult to be continued and completes the path switching process.

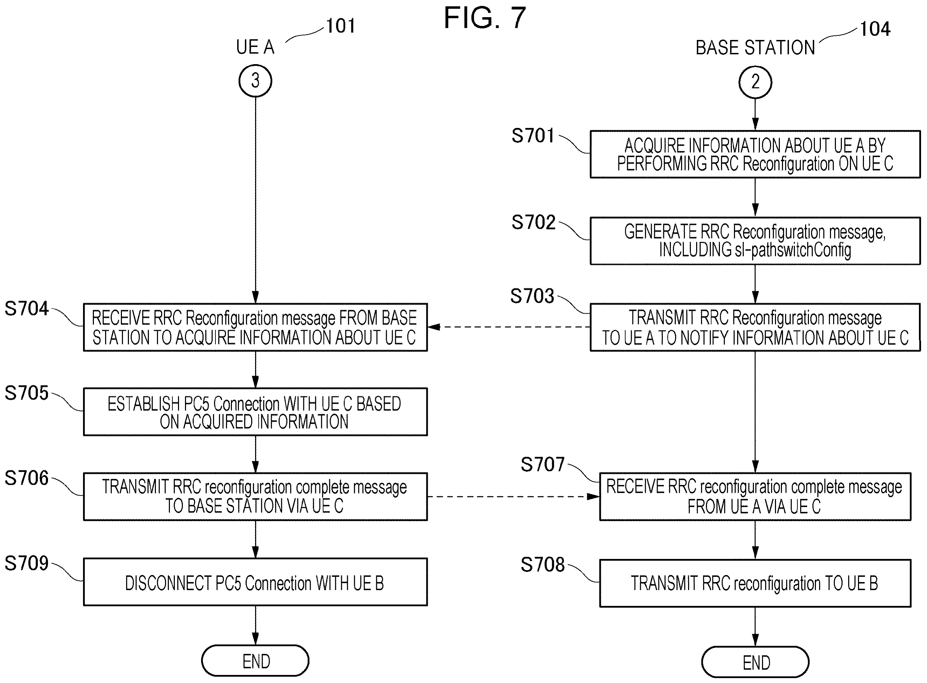

On the other hand, when the signal strength with the UE C 103 at the UE A 101 is higher than or equal to the threshold Th1 ("YES" in S605), the path switch determination processing unit 204 determines that the running service can be continued. In other words, the path switch determination processing unit 204 determines that the UE A 101 can continue the running service via the UE C 103 by switching from the indirect path via the UE B 102 to the indirect path via the UE C 103. In this case, the path switch determination processing unit 204 proceeds to step S701 in Fig. 7 and notifies the control unit 201 of a switch instruction to switch from an indirect path to an indirect path (F403). The running service is optional and may be, for example, a video streaming service, a video conferencing service, a voice call service, or the like.

The control unit 201 performs RRC reconfiguration for the UE C 103 via the wireless communication unit 207 (F404, S701). In other words, the message generation processing unit 205 notifies the UE C 103 of information needed to establish Sidelink relay communication with the UE A 101 via the wireless communication unit 207. The information needed includes sl-L2RelayUE-Config (S702). The sl-L2RelayUE-Config contains information used for Sidelink Relay Adaptation Protocol (SRAP) needed for the operation as a relay UE. The control unit 201 checks the reception of an RRC reconfiguration complete message from the UE C 103 via the wireless communication unit 207 and the message analysis processing unit 206. Upon confirming the reception of the relevant message, the control unit 201 completes the RRC reconfiguration for the UE C 103.

Subsequently, the control unit 201 performs RRC reconfiguration for the UE A 101 via the wireless communication unit 207 (F405, S703). In other words, the message generation processing unit 205 notifies the UE A 101 of information needed to establish Sidelink relay communication with the UE C 103 via the wireless communication unit 207. The information needed includes sl-L2RemoteUE-Config. The sl-L2RemoteUE-Config contains information used for Sidelink Relay Adaptation Protocol (SRAP) needed for the operation as a remote UE.

Furthermore, the message generation processing unit 205 adds sl-PathSwitchConfig into ReconfigurationWithSync in the RRC reconfiguration message. At this time, the sl-PathSwitchConfig that stores the ID of the UE C 103 is used. As a result, the message generation processing unit 205 can notify the UE A 101 of switching from an indirect path via the UE B 102 to an indirect path via the UE C 103 (S702).

The control unit 301 in the UE A 101 checks the reception of the RRC reconfiguration message from the base station 104 via the wireless communication unit 307 and the message analysis processing unit 306. At this time, the control unit 301 determines that it is the switching from the indirect path via the UE B 102 to the indirect path via the UE C 103 by checking the ID of the UE C from the sl-PathSwitchConfig (F405, S704).

Subsequently, the control unit 301 of the UE A 101 stops the transmission and reception of data to and from the UE B 102 and establishes PC5 communication (PC5 Connection) with the UE C 103 (F406, S705). Hereinafter, the UE A 101 and the UE B 103C can use Sidelink relay communication based on the SRAP information acquired from the RRC reconfiguration message. In other words, the UE A 101 can transmit and receive data to and from the base station 104 via the UE C 103.

After PC5 communication with the UE C 103 is established, the control unit 301 causes the message generation processing unit 205 to generate an RRC reconfiguration complete message. The Sidelink Relay processing unit 304 and the wireless communication unit 307 transmit the RRC reconfiguration complete message to the base station 104 via the UE C 103 (F407, S706). In other words, the Sidelink Relay processing unit 304 and the wireless communication unit 307 transmit the RRC reconfiguration complete message to the base station 104 via the UE C 103 instead of the UE B 102.

The base station 104 receives the RRC reconfiguration complete message from the UE A 101 via the UE C 102 through the wireless communication unit 307 and the message analysis processing unit 306. The base station 104 can determine that the switching of the indirect path for the UE A 101 is complete, based on the reception of the relevant message (F407, S707).

After the switching of the indirect path for the UE A 101 is complete, the base station 104 performs RRC reconfiguration for the UE B 102 to cause the UE B 102 to release the Sidelink relay function for the UE A 101 (F408, S708).

On the other hand, the UE A 101 releases the PC5 link with the UE B 102 (F409, S709).

Then, the UE A 101 continues to transmit and receive user data to and from the base station 104 via the Sidelink relay function of the UE C 103 (F410). In other words, the UE A 101 continues to transmit and receive user data (such as streaming data) to and from the base station 104 using the Sidelink Relay processing unit 304. When there are undelivered packets that are being processed by the UE B 102, those undelivered packets are transferred to the UE C 103 as needed and transmitted to the destination by the UE C 103. These undelivered packets may be configured to be directly transferred from the UE B 102 to the UE C 103, or may be configured to be transferred from the UE B 102 to the base station 104 and then transferred again from the base station 104 to the UE C 103. When the latter case, that is, a method of transferring undelivered packets via the base station 104, is adopted, transfer to the UE C 103 can be omitted when the destination of user data is not the UE A 101 but the core network for uplink communication.

Incidentally, the switching from an indirect path to a direct path and the switching from a direct path to an indirect path are defined in 3GPP; however, the switching from an indirect path to an indirect path is not defined at this time point. For this reason, when the signal strengths of both the indirect path and the direct path are low for a remote UE connected via an indirect path, the path needs to perform path switching with a different UE after once switching to a direct path, so the procedure is redundant. Due to the redundant procedure, when any one of the connections is disconnected during switching procedure, there is a possibility that the running service can be interrupted.

In contrast, in the present embodiment, a mechanism of switching from an indirect path to another indirect path with a procedure simpler than the existing procedure is defined, which makes it possible to switch from an indirect path to another indirect path with a simpler procedure than the existing procedure. According to this procedure, the base station 104 and the UE A 101 can flexibly switch from an indirect path to another indirect path. At this time, it is possible to switch to another indirect path without disconnecting a running service.

Next, other embodiments (a second embodiment and a third embodiment) that are alternatives to the first embodiment will be described. In the description of the following other embodiments, like reference signs are assigned to components similar to those of the above-described embodiment, and the description thereof may be omitted.

### <Second Embodiment>

In the above-described first embodiment, the example in which the UE A 101 constantly performs discovery while being connected to the base station 104 via an indirect path through the UE B 102 has been described. With this method, it is possible to constantly monitor, for example, the presence or absence of a candidate relay UE; however, resources, such as electric power concerned with discovery, are constantly consumed. Therefore, in the second embodiment, the necessity for the UE A to perform discovery for candidate relay UEs is determined based on the measured signal strength.

The configuration (Fig. 1) of the communication apparatuses in the second embodiment and the functional configuration (Figs. 2 and 3) of the communication apparatuses may be the same as those of the first embodiment described above, so the description is omitted.

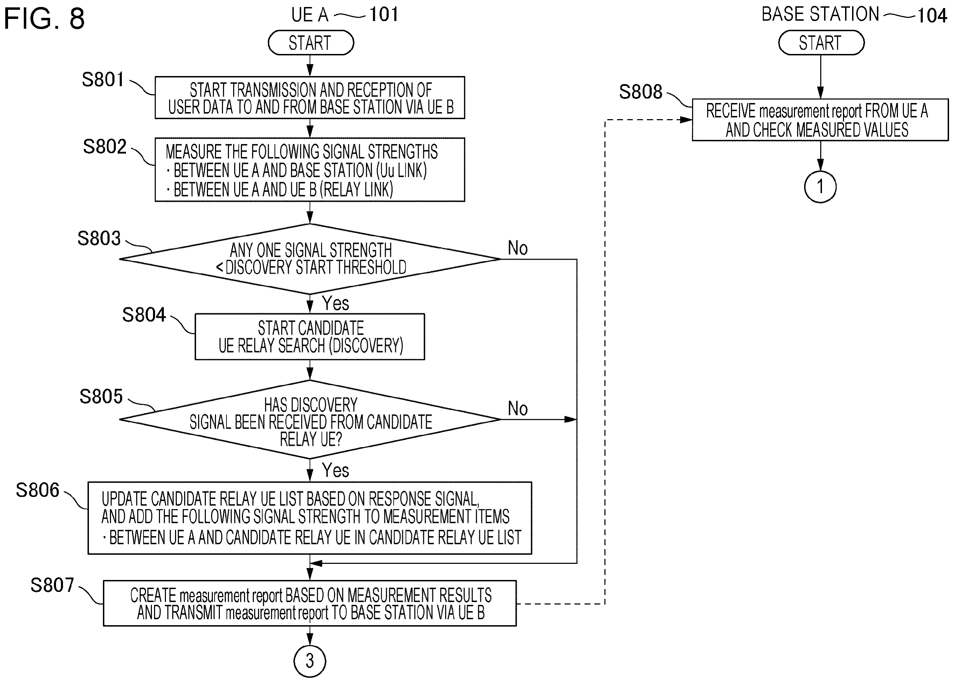

Next, the operation of the second embodiment will be described with reference to the flowchart shown in Fig. 8. The flowchart shown in Fig. 8 relates to F401 and F402 in the sequence shown in the Fig. 4, described with reference to the first embodiment.

In the present embodiment, the UE A 101 is transmitting and receiving user data (such as streaming data) to and from the base station 104 via the Sidelink relay function of the UE B 102 using the Sidelink Relay processing unit 304 (S801).

Subsequently, the signal strength measurement unit 303 activated in advance by the control unit 301 of the UE A 101 starts measuring the "signal strength of the Uu link" and "the signal strength of the relay link" (S802).

Here, in the present embodiment, when the "signal strength of the relay link" is lower the threshold Th1 or when the "signal strength of the Uu link" is lower the threshold Th2, the UE A 101 starts transmitting and receiving a discovery signal (S803, S804). In a modification, when the "signal strength of the relay link" is lower than the threshold Th1 and the "signal strength of the Uu link" is lower than the threshold Th2, the UE A 101 may start transmitting and receiving a discovery signal.

When a discovery signal or a response signal has been received from a candidate relay UE ("YES" in S805), the message analysis processing unit 306 store information about the candidate relay UE, acquired from the signal, in the candidate relay UE list. The signal strength measurement unit 303 starts measuring the "signal strength between the UE A 101 and the candidate relay UE added to the list" (S806).

The UE A 101 creates a Measurement report in accordance with an event designated by the Measurement configuration in advance from the base station 104 and transmits the Measurement report to the base station 104 (S807). The UE A 101 transmits the Measurement report to the base station 104 via the UE B 102.

When the wireless communication unit 207 of the base station 104 receives the Measurement report, the path switch determination processing unit 204 checks the various signal strengths (S807). The various signal strengths may include the "signal strength of the Uu link", the "signal strength of the relay link", and the "signal strength between the UE A 101 and the candidate relay UE in the candidate relay UE list" at the UE A 101, analyzed by the message analysis processing unit 206. The processes of the UE A 101 from S807 may be similar to the processes shown in Fig. 7 (and the processes from F403 in Fig. 4), so the description is omitted.

When the wireless communication unit 207 of the base station 104 receives the Measurement report, the path switch determination processing unit 204 checks various signal strengths at the UE A 101, analyzed by the message analysis processing unit 206 (S808). In this case, various signal strengths include the "signal strength of the Uu link", the "signal strength of the relay link" and the "signal strength between the UE A 101 and the candidate relay UE in the candidate relay UE list". The processes of the base station 104 from S808 may be similar to the processes from F403 in Figs 4, 6, and 7 (and the processes from F403 in Fig. 4), and the description is omitted.

According to the present embodiment as well, a similar advantageous effect to that of the first embodiment is obtained. According to the present embodiment, the UE A 101 can reduce resources concerned with discovery when the communication quality is high by determining the opportunity for discovery of a candidate relay UE based on the signal strength being measured.

### <Third Embodiment>

The third embodiment mainly differs from the above-described first embodiment in that, when the base station 104 determines a candidate relay UE, the base station 104 uses the "signal strength between the candidate relay UE and the base station 104" reported by the candidate relay UE.

The configuration (Fig. 1) of the communication apparatuses in the third embodiment and the functional configuration (Figs. 2 and 3) of the communication apparatuses may be the same as those of the first embodiment described above, so the description is omitted.

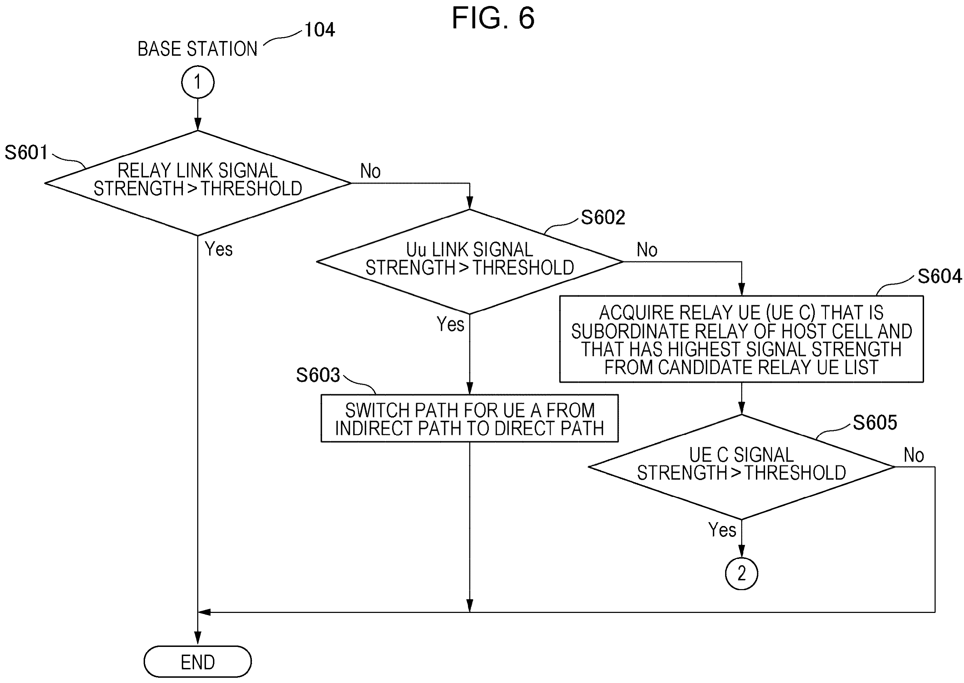

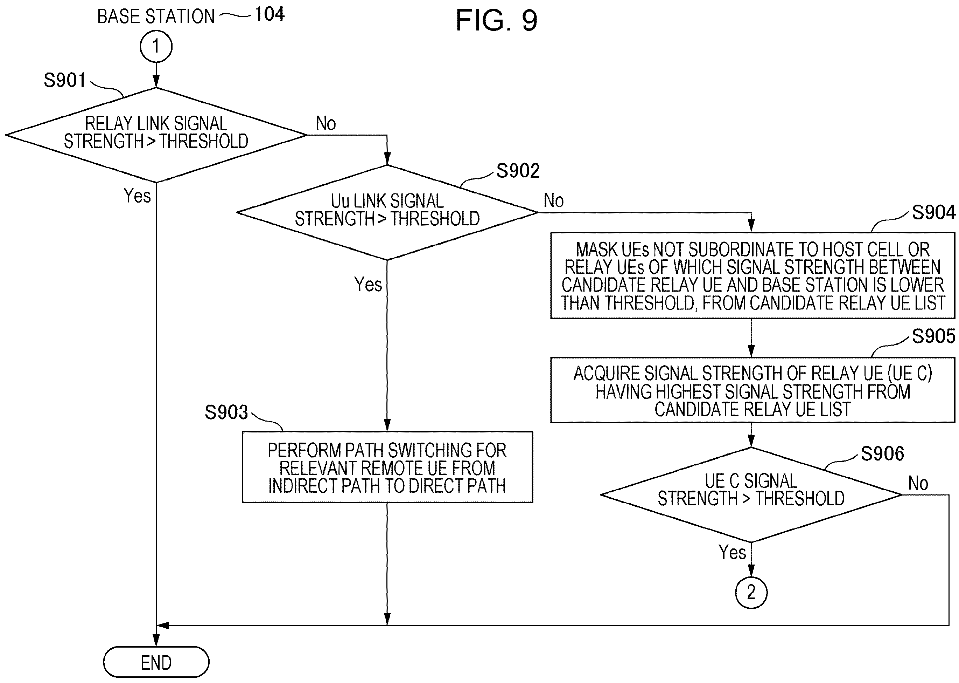

Next, the operation of the third embodiment will be described with reference to the flowchart shown in Fig. 9. The operation of the third embodiment mainly differs in that the flowchart of Fig. 6, described with refers to the first embodiment, is changed to the flowchart shown in Fig. 9.

Specifically, when the signal strength of the relay link at the UE A 101 is higher than or equal to the threshold Th1 ("YES" in S901), the path switch determination processing unit 204 determines that the relay can be continued, and completes the determination process without executing anything. When the signal strength is lower than the threshold Th1 ("NO" in S901), the path switch determination processing unit 204 determines that the relay is difficult to be continued, and checks the signal strength of the Uu link at the UE A 101. In this case, when the signal strength of the Uu link at the UE A 101 is higher than or equal to the threshold Th2 ("YES" in S902), the path switch determination processing unit 204 issues an instruction to the UE A 101 to switch from an indirect path to a direct path (S903).

When the signal strength of the Uu link at the UE A 101 is lower than the threshold Th2 ("NO" in S902), the path switch determination processing unit 204 determines that the relay is difficult to be continued even when the path is switched to the direct path, and checks the candidate relay UE list. At this time, the path switch determination processing unit 204 removes UEs that do not have their own serving cell IDs (that is, UEs that are not within the cell of the base station 104) from the candidate relay UE list (S904). The path switch determination processing unit 204 acquires the signal strength of the Uu link of the candidate relay UE (between the candidate relay UE and the base station 104) from the UE management unit 203 and removes (masks) the candidate relay UEs with the signal strength lower than the threshold Th2 from the candidate relay UE list (S904). When there is no UE without its own serving cell ID or no candidate relay UE with a signal strength lower than the threshold Th2, the candidate relay UE list remains unchanged.

Subsequently, the path switch determination processing unit 204 acquires the signal strength of the relay UE with the highest signal strength from the candidate relay UE list (S905). In the present embodiment, in an example, the relay UE with the highest signal strength is the UE C 103.

In this case, the path switch determination processing unit 204 compares the signal strength between the UE A 101 and the UE C 103 with the threshold Th1. At this time, when the signal strength between the UE A 101 and the UE C 103 is lower the threshold Th1 ("NO" in S906), the path switch determination processing unit 204 determines that the relay is difficult to be continued and completes the path switching process.

On the other hand, when the signal strength between the UE A 101 and the UE C 103 is higher than or equal to the threshold Th1 ("YES" in S906), the path switch determination processing unit 204 determines that the running service can be continued. In other words, the path switch determination processing unit 204 determines that the UE A 101 can continue the running service via the UE C 103 by switching to the indirect path via the UE C 103. In this case, the path switch determination processing unit 204 proceeds to step S701 in Fig. 7 as in the case of the first embodiment and notifies the control unit 201 of a switch instruction to switch from an indirect path to an indirect path (F403). The flow of the subsequent processes is the same as those of Figs. 4 and 7, described in the first embodiment.

Here, in the first embodiment, the base station 104 identifies the candidate relay UE with the highest signal strength from the candidate relay UE list received from the UE A 101 and attempts to switch to an indirect path via the UE C 103 (S604 in Fig. 6). However, in this case, if the signal strength between the UE C 103 and the base station 104 is lower than the threshold Th2, there is a possibility that stable Sidelink relay communication cannot be continued after switching to the indirect path.

In contrast, in the present embodiment, as described above, candidate relay UEs of which the signal strength between the UE C 103 and the base station 104 is lower than the threshold Th2 are removed from the candidate relay UE list in advance. In other words, in the present embodiment, as described above, before the base station 104 identifies the candidate relay UE with the highest signal strength from the candidate relay UE list, candidate relay UEs are narrowed down based on the "signal strength with the base station (Uu link)". Therefore, according to this present embodiment, it is possible to select candidate relay UEs that can continue more stable Sidelink relay communication and issue an instruction for path switching.

In the present embodiment, as an equivalent configuration, in step S604 of Fig. 6, candidate relay UEs of which the signal strength between the UE A 101 and the candidate relay UE is lower than the threshold Th1 may be removed from the candidate relay UE list in advance.

In a modification, from a similar viewpoint, one candidate relay UE concerned with path switching may be determined from among candidate relay UEs compositely in consideration of both the signal strength between the UE A 101 and the candidate relay UE and the signal strength between the candidate relay UE and the base station 104. For example, it is assumed that there are two or more candidate relay UEs of which the signal strength between the UE A 101 and the candidate relay UE is higher than or equal to the threshold Th1 and the signal strength between the candidate relay UE and the base station 104 is higher than or equal to the threshold Th2. In this case, among the two or more candidate relay UEs, the candidate relay UE with the highest composite value of the signal strength between the UE A 101 and the candidate relay UE and the signal strength between the candidate relay UE and the base station 104 may be determined as one candidate relay UE concerned with path switching. In this case, the composite value may be calculated in such a way that one of the signal strength between the UE A 101 and the candidate relay UE and the signal strength between the candidate relay UE and the base station 104 is given more importance than the other.

The embodiments have been described in detail above; however, not limited to those specific embodiments. Various modifications and changes are possible within the scope of the appended claims. It is also possible to combine all or some of the components of the above-described embodiments.

The present invention is not limited to the above-described embodiments. Various changes and modifications are applicable without departing from the spirit and scope of the present invention. Therefore, the following claims are attached to show the scope of the present invention.

This application claims the benefit of Japanese Patent Application No. 2023-061970 filed April 6, 2023, which is hereby incorporated by reference herein in its entirety. Reference Signs List

101 UE A
102 UE B
103 UE C
104 base station
105 communication area
201 control unit (processing unit)
202 storage unit
203 management unit
204 path switch determination processing unit (processing unit)
205 message generation processing unit
206 message analysis processing unit
207 wireless communication unit (first acquisition unit, second acquisition unit, and third acquisition unit)
301 control unit (switch processing unit)
302 storage unit
303 signal strength measurement unit (first signal strength measurement unit, and second signal strength measurement unit)
304 Sidelink Relay processing unit
305 message generation processing unit (search processing unit)
306 message analysis processing unit
307 wireless communication unit (first notification unit, and second notification unit)

## Claims

1. A base station comprising:
a first acquisition unit configured to acquire first signal strength information in a first relay state of communicating with a remote user equipment, UE, via one relay UE, the first signal strength information indicating a first signal strength between the remote UE and the one relay UE; and
a processing unit configured to, based on the first signal strength information, issue a switch instruction to the remote UE to switch from the first relay state to a second relay state of communicating with the remote UE via a different relay UE different from the one relay UE, wherein
the remote UE that can be in the first relay state is a remote UE that supports transmission of a discovery message related to 5G.

2. The base station according to claim 1, wherein the processing unit is configured to issue the switch instruction when the first signal strength is lower than a first threshold.

3. The base station according to claim 1 or 2, wherein the first acquisition unit is configured to acquire the first signal strength information based on a Measurement Report transmitted from the remote UE.

4. The base station according to any one of claims 1 to 3, further comprising
a second acquisition unit configured to acquire second signal strength information indicating a second signal strength between the remote UE and the base station, wherein
the processing unit is configured to issue the switch instruction further based on the second signal strength information.

5. The base station according to claim 4, wherein the processing unit is configured to issue the switch instruction when the second signal strength is lower than a second threshold.

6. The base station according to any one of claims 1 to 5, further comprising
a third acquisition unit configured to, for each of one or more candidate relay UEs that can become the different relay UE, acquire third signal strength information indicating a third signal strength between the remote UE and the candidate relay UE, wherein
the processing unit is configured to issue the switch instruction further based on the third signal strength information.

7. The base station according to claim 6, wherein the processing unit is configured to issue the switch instruction when the third signal strength is higher than or equal to the first threshold.

8. The base station according to claim 6 or 7, wherein the processing unit is configured to, based on the third signal strength information, determine any of the one or more candidate relay UEs, having the highest third signal strength, as a candidate for the different relay UE.

9. The base station according to any one of claims 1 to 8, wherein a process of issuing the switch instruction includes notifying a candidate for the different relay UE of information concerned with the remote UE with an RRC reconfiguration message and adding sl-pathSwitchConfig into ReconfigurationWithSync of the RRC reconfiguration message in the remote UE.

10. A user equipment comprising:
a search unit configured to, in a first connection state of communicating with a base station via one relay UE, search for a candidate relay UE different from the one relay UE in accordance with a discovery procedure; a first measurement unit configured to measure a first signal strength of a signal received from the relay UE;
a first notification unit configured to notify the base station of a first measurement result from the first measurement unit; and
a switching unit configured to, based on a fact that the user equipment receives a switch instruction from the base station notified of the first measurement result, execute a switch process to switch from the first connection state to a second connection state of communicating with the base station via a different relay UE different from the one relay UE.

11. The user equipment according to claim 10, further comprising:
a second measurement unit configured to measure a second signal strength of a signal received from a candidate relay UE found by the search unit; and
a second notification unit configured to notify the base station of a second measurement result from the second measurement unit, wherein
the different relay UE is determined from among the candidate relay UE.

12. The user equipment according to claim 10 or 11, wherein
the discovery procedure is a discovery procedure related a 5G standard, and
the discovery procedure includes at least any one of
reception of an Announcement message for 5G ProSe UE-to-Network Relay direct discovery,
reception of Additional Information, and
transmission of a Soliciation message for 5G ProSe UE-to-Network Relay direct discovery and reception of a response to the Soliciation message.

13. The user equipment according to any one of claims 10 to 12, wherein the switch instruction includes an RRC reconfiguration message that stores sl-pathSwitchConfig in ReconfigurationWithSync.

14. The user equipment according to claim 13, wherein the switch process includes establishing a PC5 connection with a UE having an ID acquired from the sl-pathSwitchConfig as a candidate for the different relay UE.

15. The user equipment according to claim 14, wherein the switch process further includes transmitting an RRC reconfiguration complete message to the base station via a candidate for the different relay UE after the PC5 connection is established.

16. The user equipment according to any one of claims 11 to 15, wherein search by the search unit is started at any one of time to start a connection with the base station via the one relay UE, time when the first signal strength is lower than a first threshold in the first connection state, and time when a signal strength with the base station is lower than a second threshold in the first connection state.

17. A control method of controlling communication, the control method comprising:
an acquisition step of acquiring first signal strength information in a first relay state of communicating with a remote UE via one relay UE, the first signal strength information indicating a first signal strength between the remote UE and the one relay UE; and
a switch step of, based on the first signal strength information, issuing a switch instruction to the remote UE to switch from the first relay state to a second relay state of communicating with the remote UE via a different relay UE different from the one relay UE, wherein
the remote UE that can be in the first relay state is a remote UE that supports transmission of a discovery message related to 5G.

18. A program for causing a computer to function as: an acquisition step of acquiring first signal strength information in a first relay state of communicating with a remote UE via one relay UE, the first signal strength information indicating a first signal strength between the remote UE and the one relay UE; and
a switch step of, based on the first signal strength information, issuing a switch instruction to the remote UE to switch from the first relay state to a second relay state of communicating with the remote UE via a different relay UE different from the one relay UE, wherein
the remote UE that can be in the first relay state is a remote UE that supports transmission of a discovery message related to 5G.
